# EUROPÄISCHE PATENTANMELDUNG

(11) **EP 0 672 491 A1**
(43) Veröffentlichungstag der Anmeldung: **20.09.1995**
(21) Anmeldenummer: 95100819.2
(22) Anmeldetag: 21.01.1995
(51) Int. Cl.: B23C 3/06

(54) **Verfahren und Werkzeugmaschine zur Herstellung von Freistichen insbesondere an Kurbelwellen**

(30) Priorität: 17.02.1994 DE 4405121
(71) Anmelder: Maschinenfabrik Ravensburg AG, D-88212 Ravensburg (DE)
(72) Erfinder: Kronstorfer, Werner, D-71720 Oberstenfeld (DE)
(74) Vertreter: Patentanwälte Eisele, Otten & Roth

(57) **Zusammenfassung**

Es wird ein Verfahren sowie eine Werkzeugmaschine zur Durchführung des Verfahrens zur Herstellung von Freistichen an Lagern einer Kurbelwelle vorgeschlagen. Hierfür wird ein Fräswerkzeug (10) verwendet, welches radial ausgerichtete Schneidelemente (20) aufweist. Die Freistiche werden durch mehrere aneinandergereihte Schnitte erzeugt, die aufgrund der exzentrischen Anordnung des Werkzeugs mit einer ellipsenförmigen Bewegung der Werkzeugschneiden hergestellt werden.

## Beschreibung

Die Erfindung betrifft ein Verfahren sowie eine Werkzeugmaschine zur Herstellung von Freistichen insbesondere an Kurbelwellen nach dem Oberbegriff des Anspruchs 1.

### Stand der Technik:

Mit modernen, numerisch gesteuerten Werkzeugmaschinen ist es heute möglich, die Hublager oder Pleuellager von Kurbelwellen zu bearbeiten, während die Kurbelwelle um ihre Hauptlagerachse rotiert. Die Kurbelwelle läuft demnach so um, wie sie später auch in einen Motor eingesetzt wird. Um eine Bearbeitung an einem exzentrisch umlaufenden Pleuellager vornehmen zu können, muß das Bearbeitungswerkzeug der Bewegung des Pleuellagers folgen, d. h. ohne Durchführung eines Bearbeitungsvorgangs führt das das Werkstück berührende Bearbeitungswerkzeug eine kreisförmige Bewegung aus. Diese kreisförmige Bewegung muß durch mindestens zwei Bewegungsachsen ausgeführt werden, die im allgemeinen durch die waagerechte X-Achse und die senkrechte Y-Achse charakterisiert sind. Dieser dem Werkstück nachfolgenden quasi "Leerbewegung" des Werkzeugs wird die Zustellbewegung zur Durchführung des Bearbeitungsvorgangs überlagert. Als Bearbeitungsmethode dient häufig das sogenannte "Drehfräsen", wie es beispielsweise aus dem Fachbuch Wilfried König: Fertigungsverfahren Band 1, 4. Auflage, Seite 310 bis 314 bekannt ist.

Unter "Drehfräsen" versteht man ein spanendes Fertigungsverfahren, bei dem die Prinzipien des Drehens und des Fräsens in der Form kombiniert sind, daß mit einem Messerkopf-Stirnfräser an einem senkrecht zum Fräser rotierenden Werkstück im allgemeinen zylindrische Flächen erzeugt werden. Dabei arbeitet der selbst angetriebene Fräser wie ein Drehmeißel mit einem Längsvorschub (Z-Achse) parallel zum Werkstück.

Es wird zwischen einem zentrischen und exzentrischen Drehfräsen unterschieden, wobei beim zentrischen Drehfräsen sich Werkzeug- und Werkstückachse in einem Punkt schneiden, während beim exzentrischen Drehfräsen diese Achsen um einen bestimmten Betrag, die Exzentrizität e, zueinander versetzt sind (s. Literatur König a.a.O.).

Das aus der oben genannten Literaturstelle beschriebene Drehfräsen dient demnach zur Herstellung von zylindrischen Flächen, wobei der Drehfräser selbst die Nachführbewegung des exzentrisch umlaufenden Pleuellagers in einer kreisförmigen Bewegung durchführen kann.

Bei schweren Werkstücken treten hohe Massenkräfte auf, die zu einem hohen Rechenaufwand bei diesen nachführenden Achsenbewegungen des Werkzeugs führen, so daß diese nur relativ langsam ausgeführt werden können. Diese langsamen Achsenbewegungen reichen zum Drehfräsen vollkommen aus, da sich die Schnittgeschwindigkeit durch eine erhöhte Drehzahl des Drehfräsers kompensiert.

Der obigen Literaturstelle zur Folge, entstehen beim zentrischen Drehfräsen scharfkantige Werkstückabsätze, während beim exzentrischen Drehfräsen kinematisch bedingte Absätze als Rundungen entstehen. Der Übergang der zylindrischen Pleuellager-Mantelfläche zu den seitlichen Planflächen bzw. den Seitenwangen kann deshalb mittels exzentrischen Drehfräsen allenfalls abgerundet werden. Die Bearbeitung bzw. Herstellung eines Freistiches, d. h. einer Hinterschneidung im Bereich des Übergangs der zylindrischen Pleuellager-Mantelfläche zur seitlichen Planfläche bzw. seitlichen Begrenzungswange ist mittels herkömmlichen Drehfräsen nicht möglich, da hier allenfalls eine Verrundung oder Abrundung entsteht. Solche Freistiche in die seitliche Planfläche werden deshalb in einem weiteren Bearbeitungsgang durch Drehen durchgeführt, wobei durch die langsamen Achsbewegungen und der entsprechenden kleinen Drehzahl der Kurbelwelle eine wirtschaftliche Bearbeitung nicht möglich ist. Außerdem werden aufgrund der beim Drehen nur niedrigen Schnittgeschwindigkeiten keine gute Oberflächenqualität erzielt. Um diesem Nachteil abzuhelfen, ist es bekannt geworden, die Bearbeitung eines Freistiches durch einen langen, dünnen Finger- oder Kugelfräser mit großer Auskraglänge durchzuführen. Ein solcher Fräser wird oben oder unten tangential an den Durchmesser bzw. die Außenmantelfläche des Pleuellagers angestellt und vollführt wiederum die kreisförmige Rundbewegung des exzentrisch umlaufenden Pleuellagers. Aufgrund seiner mangelhaften Stabilität sind nur geringe Spanquerschnitte möglich und daher sind lange Bearbeitungszeiten ebenfalls notwendig. Weiterhin sind durch die lange, dünne Ausführung eines solchen Fräsers weder hohe Oberflächengüten noch gute Standzeiten des Werkzeugs möglich.

### Aufgabe und Lösung der Erfindung:

Der Erfindung liegt die Aufgabe zugrunde, ein neues Bearbeitungsverfahren zur Herstellung von Freistichen und eine zugehörige Werkzeugmaschine vorzuschlagen, welche die oben genannte Nachteile nicht aufweist und die insbesondere eine wesentlich höhere Wirtschaftlichkeit der Bearbeitung ermöglicht.

Diese Aufgabe wird ausgehend von einem Verfahren gemäß dem Oberbegriff des Verfahrensanspruchs 1 bzw. dem Oberbegriff des Werkzeugmaschinenanspruchs erfindungsgemäß durch die jeweiligen kennzeichnenden Merkmale eingelöst.

In den Unteransprüchen sind vorteilhafte und zweckmäßige Weiterbildungen des jeweiligen Hauptanspruchs angegeben.

### Vorteile der Erfindung:

Das erfindungsgemäße Verfahren bzw. die zugehörige Werkzeugmaschine hat gegenüber den bekannten Verfahren mit zugehörigen Bearbeitungsmaschinen den Vorteil, daß eine wesentlich erhöhte Wirtschaftlichkeit erzielt wird. Weitere Vorteile liegen in der höheren Stabilität durch eine wesentlich geringere Auskraglänge des Werkzeugs. Die höhere Stabilität wird auch wesentlich durch einen größeren Werkzeug- und Fräsdorndurchmesser gegenüber dem bekannten Werkzeug erzielt.

Aufgrund der höheren Schnittgeschwindigkeiten mit den in Werkzeugmaschinen üblichen Drehzahlen im Zusammenhang mit dem größeren Werkzeugdurchmesser werden höhere Spanleistungen und damit eine erhöhte Wirtschaftlichkeit erzielt. Ein weiterer Vorteil liegt in der verbesserten Oberflächengüte durch eine höhere Stabilität und den höheren Schrittgeschwindigkeiten. Aufgrund des gegenüber dem herkömmlichen Werkzeug größeren Werkzeugdurchmessers können Werkzeuge mit höheren Schneidenzahlen eingesetzt werden, die ebenfalls die Wirtschaftlichkeit erhöhen. Schließlich sind auch höhere Standzeiten aufgrund der besseren Stabilität gegeben.

Der Erfindung liegt der Kerngedanke zugrunde, daß auch zur Herstellung bzw. Bearbeitung eines Freistiches das übliche Drehfräsverfahren angewandt wird, wobei ein spezieller stabilier Fräsdorn mit aufgesetztem Messerkopf radial an das Pleuellager angestellt und hierbei im exzentrischen Drehfräsverfahren, d. h. mit einem Höhenversatz der sich kreuzenden Achsen gearbeitet wird. Durch die exzentrische Anordnung des Werkzeugs wird eine ellipsenförmige Bewegung oder Hüllkurve der Werkzeugschneide erreicht, die je nach Vorschub in Richtung der Planfläche zu einem spanabhebenden Abtrag führt. Durch ein aneinanderreihen solcher Hüllkurven in mehreren Bearbeitungsschritten wird der gewünschte Radius des Freistiches erzeugt. Eine solche Bearbeitung ist vor allem zur wirtschaftlichen Vorbearbeitung von Freistichen in kleinen Schritten geeignet; sie kann jedoch auch für die Fertigbearbeitung eingesetzt werden, indem man die Schnitte der einzelnen Bearbeitungsvorgänge dicht nebeneinander legt.

Das erfindungsgemäße Verfahren zur Herstellung von Freistichen läßt sich selbstverständlich auch an der zentrisch umlaufenden Hauptlagerachse anwenden. In diesem Fall braucht das Werkzeug keine dem Werkstück nachführende Bewegung als Grundbewegung durchführen.

Weitere Einzelheiten und Vorteile der Erfindung ergeben sich aus dem nachfolgend erläuternden Ausführungsbeispiel der Erfindung unter Zuhilfenahme der Zeichnungen.

Es zeigen
- Fig. 1a: eine Seitenansicht eines Teils einer Kurbelwelle mit einem exzentrisch umlaufenden Pleuellager in oberster Hubstellung,
- Fig. 1b: eine Draufsicht der Darstellung nach Fig. 1a,
- Fig. 1c: einen Längsschnitt durch Fig. 1a entlang der Schnittlinie I-I,
- Fig. 2a: eine Einzeldarstellung einer ellipsenförmigen Schnittbewegung der Werkzeugschneide zur Erzeugung eines Freistrichs gemäß Einzelheit 19 in Fig. 1b,
- Fig. 2b: drei ellipsenförmige Bewegungen in drei nachfolgenden Bearbeitungsschritten,
- Fig. 2c: sieben ellipsenförmige Bearbeitungsschritte zur Erzielung eines gewünschten Radius eines Freistichs,
- Fig. 3a: eine Stirnansicht eines Fräswerkzeugs und
- Fig. 3b: eine Seitenansicht des Fräswerkzeugs im Längsschnitt.

### Beschreibung der Erfindung:

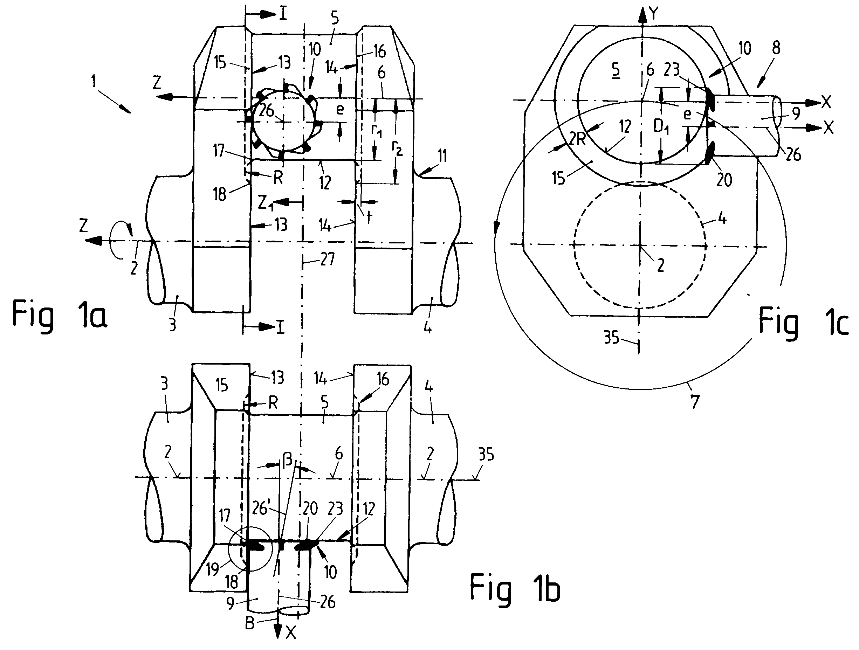

In einem in den Figuren 1a bis 1c nicht näher dargestellten Maschinenbett einer Werkzeugmaschine wird eine Kurbelwelle 1 um ihre Hauptlagerachse 2 rotierend im Spannfutter eines Spindelstocks eingespannt. Die gegenüberliegende Seite der Kurbelwelle ist in einem Reitstock gelagert. In Fig. 1a sind die zentrisch gelagerten Hauptlager 3, 4 sowie das exzentrisch umlaufende Pleuellager 5 (auch Hublager genannt) in oberster Hubstellung dargestellt. Die ebenfalls horizontal ausgerichtete Lagerachse 6 des Pleuellagers 5 läuft demzufolge konzentrisch um die Hauptlagerachse 2 herum. Diese Kreisbewegung ist in Fig. 1c mit dem Umlaufkreis 7 um die Mittelachse 2 dargestellt.

Die Werkzeugmaschine weist einen dreidimensional bewegbaren Support auf, der eine Fräseinheit 8 trägt. Die Fräseinheit 8 weist einen stabilen Fräsdorn 9 auf, mit einem stirnseitig aufgesetzten Messerkopf 10 zum Drehfräsen. Sofern das Drehfräsen an dem um die Hauptlagerachse 2 rotierenden Pleuellager 5 erfolgt, muß die Fräseinheit demzufolge eine kreisförmige Bewegung in der x-y-Ebene entlang dem Umkreis 7 durchführen, um dem Pleuellager in seiner jeweiligen Lage zu folgen. Dieser kreisförmigen Bewegung wird dann die eigentliche Zustellbewegung beim Bearbeitungsvorgang überlagert, wie dies in der eingangs erwähnten Literaturstelle Wilfried König (a.a.O.) erläutert ist. Wie in dieser Literaturstelle bereits geschildert, erzeugt ein solches Drehfräsen bei einer exzentrischen Anordnung des Drehfräsers am jeweiligen Auslauf eine Rundung 11, wie sie beispielsweise am Hauptlagerzapfen 4 in Fig. 1a dargestellt ist. Eine solche geringe Verrundung des Übergangs der zylindrischen Mantelfläche 12 des Pleuellagers 5 zu den beiden seitlichen Planflächen 13, 14, auch Seitenwangen 13, 14 genannt, reicht häufig nicht aus, um die geforderte Stabilität der Kurbelwelle zu erzeugen. Vielmehr werden an den Hauptlagern 3, 4 und insbesondere auch am Pleuellager 5 sogenannte Freistiche 15, 16 gefordert, die eine Art umlaufende bogenförmige Hinterschneidung z. B. mit einem Radius R bilden. Der herzustellende Freistich 15, 16 am Pleuellager 5 stellt demnach eine um die Lagerachse 6 umlaufende, bogenförmige Abrundung dar, die am Radius r₁ der zylindrischen Außenmantelfläche 12 beginnt (Punkt 17) und sich radial nach außen bogenförmig bis zum Radius r₂ erstreckt (Punkt 18). Die Eindringtiefe t des Freistichs in die jeweiligen Seitenwangen 13, 14 bestimmen ebenfalls die Formgebung dieses Freistiches 15, 16.

Die Formgebung des Freistiches 15, 16 muß nicht auf einem Kreisbogen mit dem Radius R liegen. Vielmehr kann der Freistich auch eine sonstige gewünschte bogenförmige Kontur aufweisen, die nicht einheitlich ein gleichbleibenden Radius aufweist.

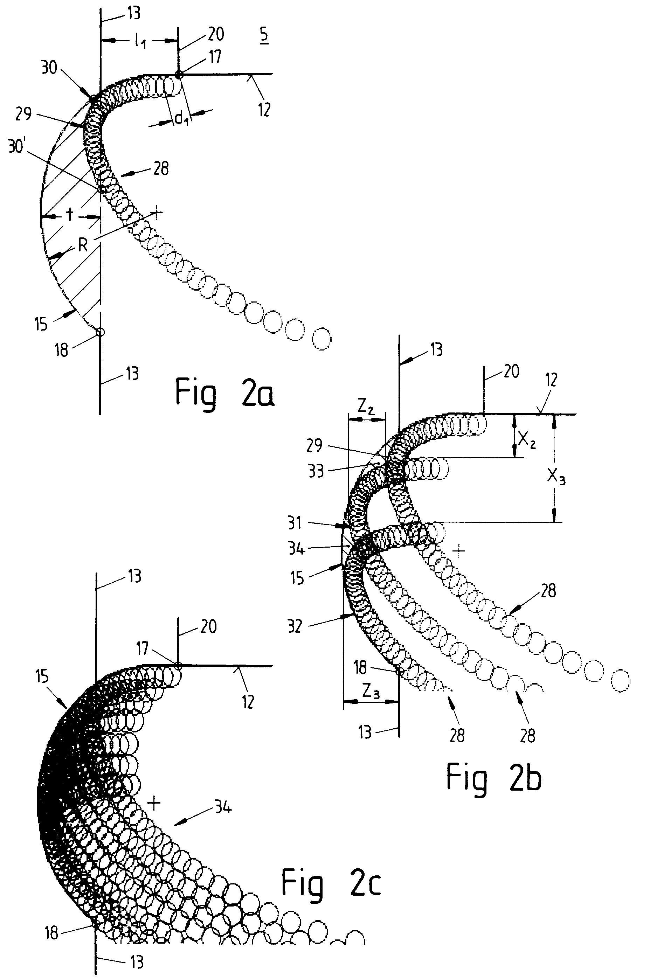

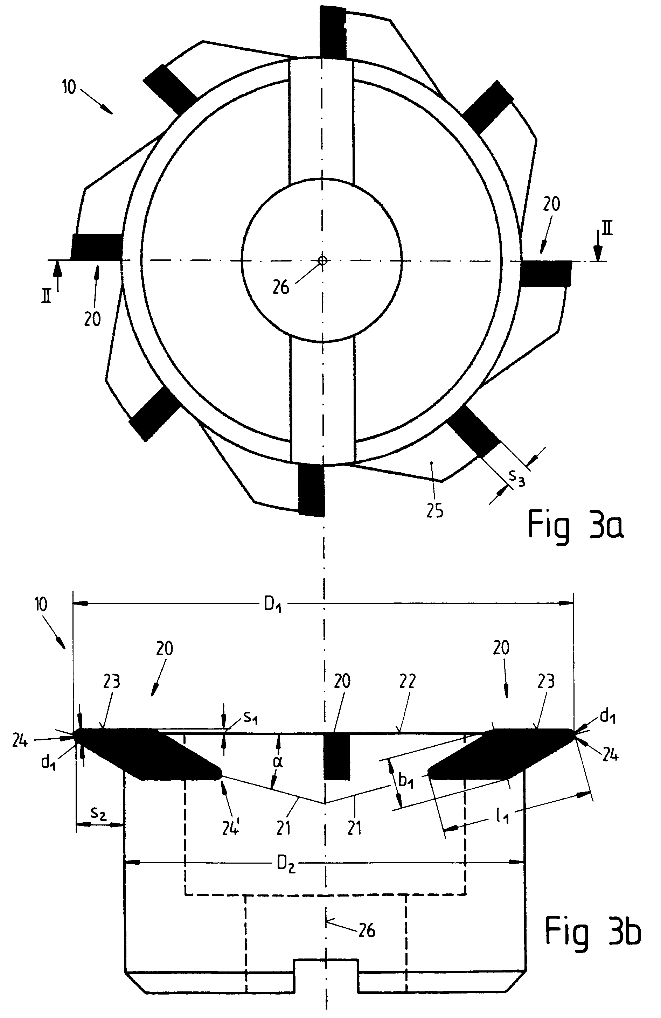

In den Figuren 2a bis 2c ist in vergrößerter Darstellung ein bogenförmiger Einstich 15 dargestellt, wie er erfindungsgemäß hergestellt werden soll. Dabei zeigt die Fig. 2a die Einzelheit 19 aus Fig. 1b, d. h. eine vergrößerte Darstellung des herzustellenden umlaufenden Freistichs 15. Hierbei sind die zylindrische Mantelfläche 12 des umlaufenden Pleuellagers 5 und die seitliche Planfläche 13 eingezeichnet. Der Beginn des Freistichs 15 im Bereich der Zylindermantelfläche 12, d. h. der Punkt 17 befindet sich um das Maß l₁ seitlich versetzt zur seitlichen Planfläche 13. Die in Fig. 2a eingezeichnete Vertikallinie 20 deutet deshalb das Ende des zylindrischen Teils des Pleuellagers 5 bzw. den Beginn des Freistichs 15 an. Zur Herstellung der Freistiche 15, 16 wird ein Fräswerkzeug mit einem Messerkopf 10 verwendet, wie er in den Figuren 1a bis 1c schematisch und in den Figuren 3a, 3b näher dargestellt ist.

Der in den Figuren 3a, 3b in Stirnansicht (Fig. 3a) sowie in einer schematischen Schnittdarstellung entlang der Schnittlinie II-II dargestellte Messerkopf 10 weist an seinem Umfang beispielsweise acht einzelne Hartmetall-Wendeschneidplättchen 20 auf, die einen rautenförmigen Querschnitt aufweisen. Dabei bildet die Längsachse 21 jeder Raute einen spitzen Winkel α ≈ 15° mit der vorderen Planfläche 22 des Messerkopfs 10. Die axiale Stirnfläche 23, d. h. eine Seitenfläche jeder Raute liegt nahezu in der vorderen Planfläche 22 bzw. ist parallel hierzu in einem geringen vorstehenden Abstand s₁ ausgerichtet. Der seitliche Überstand s₂ der Hartmetall-Schneidplatte 20 muß mindestens so groß sein, wie es der maximalen Tiefe t des Freistichs 15, 16 entspricht. Die Hartmetall-Plättchen 20 ragen demzufolge nach vorne hin spitzauslaufend radial nach außen und bilden eine radiale Schneide 24 mit einer Außenrundung, die einen Durchmesser d₁ aufweist. Die einzelnen Hartmetall-Schneidplättchen 20 weisen in einem Ausführungsbeispiel z.B. eine Länge l₁ ≈ 20 mm und eine Breite b₁ ≈ 10 mm sowie eine Stärke s₃ ≈ 6 mm auf, wobei der freie Überstand s₂ ≈ 8 mm beträgt. Die Schneidplättchen 20 werden in herkömmlicherweise auf Abstützflächen 25 am Messerkopf 10 aufgeschraubt, wobei die radial außenliegenden Schneiden 24 gewechselt werden können. Die innere Schneide ist demzufolge mit 24' bezeichnet. Derartige Hartmetall-Schneidplättchen werden deshalb als "Wendeschneidplatten" bezeichnet.

Der in den Figuren 3a, 3b beispielhaft dargestellte Messerkopf 10 weist demzufolge einen durch die Hartmetall-Schneidplättchen 20 gebildeten äußeren Bearbeitungsdurchmesser D₁ auf, der beispielsweise einen Betrag D₁ ≈ 125 mm aufweist. Dieser Fräserdurchmesser kann wesentlich größer sein als der Durchmesser des herzustellenden Freistichs, dessen Radius mit R in den Figuren 1a bis 1c bzw. in Fig. 2a dargestellt ist, wobei D₁ ≈ 5 x 2R betragen kann.

Die Herstellung des Freistichs 15 wird anhand der Figuren 1a bis 1c bzw. Figuren 2a bis 2c näher erläutert.

Der in den Figuren 3a, 3b dargestellte Messerkopf 10 wird mit seiner Symmetrielängsachse 26 um einen Exzenterbetrag e außermittig zur Lagerachse 6 angeordnet, wie dies prinzipell beim Drehfräsen gemäß eingangs erwähnter Literaturstelle bekannt ist. Dabei wird der Messerkopf 10 gemäß der Darstellung der Draufsicht nach Fig. 1b radial soweit an die zylindrische Mantelfläche 12 des Pleuellagers 5 herangeführt, daß die axialen Stirnflächen 23 diese nahezu berühren (s. Figuren 1b, 1c). Sodann wird der Messerkopf 10 mit seiner Längsachse 26 soweit außermittig in den Figuren 1a, 1b nach links gegenüber der vertikalen Symmetrieebene 27 um ein Maß z₁ (Z-Achse) verschoben, bis die vordere radiale Schneide 24 die seitliche Planfläche 13 bzw. den beim Drehfräsen entstehenden Radius berührt.

Aufgrund der exzentrischen Anordnung des Messerkopfes um die Exzentrizität e wird eine ellipsenförmige Bewegung der vorderen radialen Schneide 24 durchgeführt, wie sie beispielsweise in Fig. 2a in einem ersten Bearbeitungsschritt dargestellt ist. Die in Fig. 2a aneinandergereihten Kreise 28 stellen jeweils den vorderen Durchmesser d₁ der radialen Schneide 24 dar, wie er sich als Schneidhüllkurve bei einer Drehbewegung des Messerkopfes 10 wiedergibt. Die durch die Kreise 28 in Fig. 2a dargestellte erste Hüllkurve 29 hat eine elliptische Form, wobei der elliptische Bogen als erste Annäherung zur Bearbeitung des oberen Teils des Freistichs 15 dient. Danach ist der Bereich vom Punkt 17 bis zum Punkt 30 bzw. 30'in Fig. 2a als Freistichteil hergestellt. Der übrige, in Fig. 2a schraffierte Teil des Freistichs 15 ist demzufolge noch nicht hergestellt. Selbstverständlich erstreckt sich der bereits durch die erste Hüllkurve 29 dargestellte Teil des Freistichs aufgrund der Umdrehung des Werkstücks auf dem kompletten Außenumfang des Pleuellagers 5.

Zur Herstellung des weiteren Verlaufs des Freistichs 15 wird gemäß der Darstellung nach Fig. 2b der Messerkopf 10 um den Betrag z₂ in Richtung der Z-Achse und um den Betrag x₂ (X-Achse) horizontal bzw. waagerecht nach außen verstellt. Hierdurch ergibt sich die zweite Hüllkurve 31, wie sie durch die Einzelkreise 28 der radialen Schneide 24 wiederum dargestellt ist. Auch die zweite Hüllkurve 31 ist in ihrer ellipsenähnlichen Form so angelegt, daß sie möglichst nah an die herzustellende Freistichkurve 15 heranreicht. In Fig. 2b ist eine dritte Hüllkurve 32, gebildet durch Einzelkreise 28 eingezeichnet, die sich aus einem Versatz des Messerkopfs 10 um den Betrag z₃ in Richtung der seitlichen Planfläche 13 (Z-Achse) und um einen waagrecht nach außen gerichteten Versatz x₃ (X-Achse) gegenüber der Ausgangsstellung des Werkzeugs darstellt. Diese dritte Hüllkurve 32 nähert sich mit seiner elliptischen Formgebung nahezu vollständig dem unteren Bereich des gewünschten Freistichs 15 an, so daß bereits mit drei Hüllkurven 29, 31, 32 nahezu ein vollständig umlaufender Freistich 15 in der gewünschten Formgebung geschaffen ist. Aufgrund der elliptischen Formgebung bleiben jedoch die in der Fig. 2b gestrichelten Bereiche 33, 34 stehen, die noch nicht von der beabsichtigten Idealkurve des Freistichs 15 abgetragen sind. Demzufolge werden nach der Darstellung nach Fig. 2c beispielsweise sieben Hüllkurven 34 als einzelne Bearbeitungsschritte hergestellt, die mit ihrer ellipsenförmigen Außenkontor eine vollständige Ausformung des herzustellenden Freistichs 15 bilden.

Durch die exzentrische Anordnung des Messerkopfes 10 werden demzufolge ellipsenförmige Bewegungen und damit die dargestellten Hüllkurven der vorderen radialen Schneide 24 erzeugt, die teilweise den herzustellenden Freistich 15, 16 bilden. Mit einer entsprechenden Abstimmung der Werkzeuggröße, der Werkzeugform sowie der Anordnung kann die Hüllkurve unterschiedliche ellipsenförmige oder auch kreisförmige Formen aufweisen, die empirisch bestimmt werden können. Durch Aneinanderreihen solcher Bögen bzw. Hüllkurven in mehreren Schnitten wird der gewünschte Radius R des Freistiches erreicht. Je nach Anzahl der gewählten Hüllkurven 34 wird eine mehr oder weniger genaue Bearbeitung des Freistiches 15 erzielt, wobei die Schnitte dicht nebeneinander gelegt werden.

Mittels des Verfahrens und der entsprechenden maschinenmäßigen Anordnung können auch Freistichformen gewählt werden, bei denen der Pleuellagerdurchmesser im Freistichbereich bei Bedarf verkleinert wird. Hierfür wird die Frässpindelachse 26 um einen geringen Betrag in der horizontalen Ebene schräg gestellt, was in Fig. 1b mit Bezugszeichen 26' angedeutet ist. In diesem Fall kippt der komplette Messerkopf 10, so daß der Fräser dann im Freistichbereich den Pleueldurchmesser wegfräsen kann, ohne mit seiner Rückseite den Durchmesser im Lagerbereich zu beschädigen. Der Neigungswinkel β ist in Fig. 1b schematisch dargestellt. Gemäß der Erfindung kann auch mit runden Schneidplatten ("Pilzen") vor allem beim Schlichten die Oberfläche und der Überdeckungsgrad der einzelnen Schnitte noch verbessert werden. Durch Einsatz einer Schleif- und Polierscheibe mit dem gleichen Durchmesser und Profil des Messerkopfs kann eine besonders hohe Oberflächengüte erzielt werden.

Die Besonderheit der vorliegenden Erfindung liegt demnach darin, daß der Außendurchmesser des Messerkopfes 10 deutlich größer sein kann, als der Durchmesser des herzustellenden Freistichs. Dabei kann der Messerkopf durchaus einen Durchmesser aufweisen, der ca. fünfmal größer ist als der Durchmesser des Freistiches. Der erzeugte Freistich kann eine völlig andere Form aufweisen, als die den Freistich erzeugende Schneide. Hierdurch können die Schnittbedingungen wesentlich verbessert werden. Grundsätzlich stellt sich nur eine kurze Berührungslinie zwischen Schneide und Kurbelwelle ein, so daß nur eine geringe Reibung und geringste Ratterneigungen zu verzeichnen sind. Auch der den Messerkopf 10 tragende Fräsdorn 9 kann aufgrund der tangentialen Anstellung kürzer ausgebildet sein, als dies bei herkömmlichen Bearbeitungsmethoden der Fall ist. Dies deshalb, da er lediglich die zylindrische Außenmantelfläche 12 des Pleuellagers 5 erreichen muß und nicht wie bei herkömmlichen Werkzeugen bis zur vertikalen Mittelsymmetrieebene 35 zur tangentialen Berührung reichen muß. Die Verkürzung des Fräsdornes 9 beträgt deshalb etwa dem halben Pleuellagerdurchmesser (r₁).

Die Erfindung ist nicht auf das beschriebene oder dargestellte Ausführungsbeispiels eines Verfahrens bzw. einer zugehörigen Werkzeugmaschine beschränkt. Sie umfaßt auch vielmehr alle fachmännischen Weiterbildungen des erfindungsgemäßen Gedankens.

## Patentansprüche

1. Verfahren zur Herstellung von Freistichen (15, 16) insbesondere an Seitenwangen (13, 14) an einem zentrisch umlaufenden Hauptlager (3, 4) und/oder an einem exzentrisch umlaufenden Pleuellager (5) einer Kurbelwelle (1), wobei bei exzentrisch umlaufenden Pleuellager (5) ein Fräswerkzeug (10) eine dem exzentrisch umlaufenden Werkstück (5) folgende Bewegung durchführt und das Fräswerkzeug (10) mit seiner Längsmittelachse (26) etwa senkrecht zur Vertikalsymmetrieebene (36) des Lagers angeordnet ist, dadurch gekennzeichnet, daß das Fräswerkzeug (10) zur Herstellung eines Freistiches mit seiner Längsmittelachse (26) um ein Exzentermaß e gegenüber der horizontalen Lagerachse (6) des Lagers (5) versetzt angeordnet ist und mit einer ersten Zustellbewegung in die das Lager (5) begrenzende Seitenwange (13, 14) (z-Achse) eintaucht, wobei aufgrund der exzentrischen Anordnung eine erste ellipsenähnliche Hüllkurve (29) der Schneide (24) des Fräswerkzeugs (10) entsteht und daß in nachfolgenden, einzelnen Zustellungbewegungen in Richtung zur Seitenwange (13, 14) (z-Achse) und in Richtung der Längsmittelachse (26) des Fräswerkzeugs (10) (x-Achse) die Freistichkontur (15, 16) herstellbar ist.

2. Verfahren nach Anspruch 1, dadurch gekennzeichnet, daß das Fräswerkzeug (10) vor der ersten Zustellbewegung (29) stirnseitig an die Zylindermantelfläche (12) angesetzt ist und daß die weiteren Zustellbewegungen in Richtung der Z-Achse und in Richtung der X-Achse radial vom Werkstück weglaufend erfolgen.

3. Verfahren nach Anspruch 1 oder 2, dadurch gekennzeichnet, daß die Hüllkurve (29, 31, 32, 34) der Scheiden (24) des Fräswerkzeugs (10) eine ellipsenähnliche Kontur aufweisen, die wenigstens teilweise in das Werkstück eindringt.

4. Verfahren nach einem der Ansprüche 1 bis 3, dadurch gekennzeichnet, daß zur Herstellung von kleineren Pleuellagerdurchmessern im Bereich des Freistichs die Längsmittelachse (26) des Fräswerkzeugs (10) in einer horizontalen Ebene geringfügig in einem Winkel β schräg zur Lotrechten auf eine Vertikalsymmetriebene (35) durch das Pleuellager (5) verstellbar ist.

5. Werkzeugmaschine zur Durchführung des Verfahrens nach einem oder mehreren der vorhergehenden Ansprüche 1 bis 4, mit einer auf einem Maschinenbett in den Hauptlagern zentrisch eingespannten Kurbelwelle (1) mit exzentrisch umlaufenden Pleuellager (5) und mit einem, mit den Pleuellagern kreisförmig umlaufenden Fräswerkzeug (10) zur Bearbeitung des Pleuellagers (Drehfräsen), dadurch gekennzeichnet, daß zur Herstellung eines Freistichs (15, 16) an einer Seitenwange (13, 14) des Pleuellagers (5) die Längsmittelachse (26) (B-Achse) des Fräswerkzeugs (10) um ein Exzentermaß e versetzt zur Längsmittelachse (6) des Pleuellagers (5) angeordnet ist und daß die Kontur des Freistiches (15, 16) durch nachfolgende, einzelne Zustellbewegungen in Richtung der Kurbelwellenlängsachse (Z-Achse) sowie in Richtung der Längsmittelachse (26) (B-Achse) des Fräswerkzeugs (X-Achse) herstellbar ist.

6. Werkzeugmaschine nach Anspruch 5, dadurch gekennzeichnet, daß der wirksame Durchmesser D₁ des Fräswerkzeugs (10) ca. fünfmal größer ist als der Durchmesser (2R) des herzustellenden Freistichs (15, 16).

7. Werkzeugmaschine nach Anspruch 5 oder 6, dadurch gekennzeichnet, daß das Fräswerkzeug eine vorzugsweise im Querschnitt rautenförmige Wendeschneidplatte (20) aufweist, die stirnseitig am Fräswerkzeug (10) angebracht ist und eine nahezu parallel zur vorderen Planfläche (22) des Fräswerkzeugs ausgerichtete Stirnkante (23) als Rautenseite und einen seitlichen Überstand s₂ aufweist, der wenigstens der Tiefe t des herzustellenden Freistichs (15, 16) entspricht.
